# EUROPÄISCHE PATENTSCHRIFT

(11) **EP 1 134 105 B1**
(45) Veröffentlichungstag und Bekanntmachung des Hinweises auf die Patenterteilung: **12.09.2007**
(21) Anmeldenummer: 01105763.5
(22) Anmeldetag: 08.03.2001
(51) Int. Cl.: B60J 7/00

(54) **Schiebehimmel für ein Fahrzeugdach mit gegen Ausdrücken gesicherter Himmelplatte**
Sliding screen for vehicle roof with anti sqeezing reinforced screen panel
Store coulissant pour toit de véhicule avec panneau de plafond renforcé contre l'écrasement

(30) Priorität: 16.03.2000 DE 10012770; 16.03.2000 DE 10012771
(43) Veröffentlichungstag der Anmeldung: 19.09.2001
(73) Patentinhaber: Webasto AG, 82131 Stockdorf (DE)
(72) Erfinder: Bienert, Horst, 82131 Gauting (DE); Wittal, Roland, 80687 München (DE); BERGMILLER Alexander, 86152 Augsburg (DE); ELBS Norbert, 80797 München (DE); SCHLEICHER Bernd, 80689 München (DE); SCHWARZ Markus, 79822 Titisee-Neustadt (DE)
(74) Vertreter: Wiese, Gerhard

(56) Entgegenhaltungen:
- DE-A- 3 522 047
- DE-C- 19 804 144
- US-A- 4 103 962

## Beschreibung

Die vorliegende Erfindung betrifft einen Schiebehimmel für ein Fahrzeugdach zur Abdeckung wenigstens eines öffnungsfähigen Deckels, der eine Himmelplatte und dieser zugeordnete zusätzliche Versteifungen aufweist.

Ein derartiger Himmel für ein Fahrzeugdach ist beispielsweise aus der DE 35 34 375 A1 bekannt. Um die Angleichung der Himmelplatte an den Dachhimmel zu erleichtern, ist die Himmelplatte bei diesem bekannten Fahrzeugdach zweiteilig aus einem Himmelkörper und einem Himmelplattenrahmen gebildet, der mit dem Himmelkörper fest verbunden ist. Die Himmelplatte steht seitlich über Gleitschuhe mit dachfesten Führungen im Eingriff. Ein Nachteil dieses Fahrzeugdachs sowie ähnlicher Fahrzeugdächer mit gleitverschiebbar geführter Himmelsplatte besteht darin, daß die Himmelplatte den geforderten Ausdrückkräften im Fall einer Beanspruchung von innen nicht zu widerstehen vermag. Unter Beanspruchung in diesem Sinne wird ein Unfallszenario verstanden, bei welchem ein Insasse gegen die Himmelplatte geschleudert wird. Für die Überprüfung der dabei auftretenden Lasten existieren Prüfvorschriften von Fahrzeugherstellern. Auch der Rahmen des vorstehend genannten bekannten Fahrzeugdachs, der für die Himmelplatte vorgesehen ist, vermag einer derartigen Beanspruchung, wenn überhaupt, nur unzureichend zu widerstehen. Dasselbe gilt grundsätzlich für sonstige Versteifungen der Himmelplatte, die beispielsweise in Gestalt von Verstärkungsleisten in der DE-A1 35 22 047 offenbart sind.

Die Aufgabe der vorliegenden Erfindung besteht angesichts dieses Standes der Technik darin, einen Schiebehimmel für ein Fahrzeugdach der eingangs genannten Art zu schaffen, welcher eine erhöhte Widerstandsfähigkeit gegenüber Ausdrückkräften gewährleistet.

Gelöst wird diese Aufgabe durch die Merkmale des Anspruchs 1. Vorteilhafte Weiterbildungen der Erfindung sind in den Unteransprüchen angegeben.

Demnach sieht die Erfindung eine spezielle Rückhalteeinrichtung für die Himmelplatte vor, um einer Beanspruchung durch Ausdrückkräfte wirksam widerstehen zu können. Bei der Rückhalteeinrichtung handelt es sich erfindungsgemäß um von den eigentlichen Gleitelementen der Himmelplatte unabhängige Fanghaken, Bänder oder Streben, die oberhalb oder innerhalb der Himmelplatte verlaufen und seitlich mit dachfesten Führungen im Eingriff stehen. Um das Rückhaltevermögen der aus Fanghaken, Bändern, Verstärkungsleisten oder Streben bestehenden Rückhalteeinrichtung zu optimieren, ist ferner vorgesehen, daß die dachfesten Führungen als zusätzliche zweite Führungen ausgebildet sind, welche separat von ersten Führungen vorgesehen sind, die zur Aufnahme von Gleitelementen der Himmelplatte dienen. Dieser Verbund aus unabhängigen Fanghaken, Bändern, Verstärkungsleisten oder Streben und dachfesten Führungen für diese kann problemlos so ausgelegt werden, daß sie die Himmelplatte sicher in Position halten, so daß die existierenden Prüfvorschriften von Fahrzeugherstellern erfüllt werden. Insbesondere kann den erfindungsgemäß vorgesehenen Bändern oder Streben durch Wahl ihres Werkstoffs, aus welchem Sie bestehen und durch Wahl ihrer Abmessungen und/oder ihres Profils ein vorgegebenes Verformungsverhalten bzw. eine vorgegebene Biegesteifigkeit verliehen werden, so daß sie die geforderte Widerstandsfähigkeit der Himmelplatte gegenüber Ausdrückkräften gewährleisten. Insbesondere kann durch das Verformungsverhalten der Bänder oder Streben diese Rückhalteeinrichtung abgestimmt sein auf die Steifigkeit des öffnungsfähigen Deckels, der aus Blech, Kunststoff oder Glas besteht, um Ausdrückkräften einen größtmöglichen gemeinsamen Widerstand entgegenzusetzen und insgesamt einen optimalen Insassenschutz zu bieten.

Ein zusätzlicher, nicht gering zu schätzender Vorteil des erfindungsgemäß ausgebildeten Schiebehimmels besteht darin, daß er aufgrund der stabilen Rückhalteeinrichtung einen Schutz gegen einen Einbruch über das Schiebedach bildet.

Gemäß einer besonders vorteilhaften Weiterbildung der Erfindung sind die Fanghaken, Bänder oder Streben der Rückhalteeinrichtung seitlich über längs verlaufende Gleitelemente miteinander verbunden, die aufgrund ihrer Längserstreckung über eine relativ lange Strecke im Eingriff mit den dachfesten Führungen stehen und damit gewährleisten, daß die auf die Bänder oder Streben einwirkenden Ausdrückkräfte über eine möglichst lange Stecke in die dachfesten Führungen und damit in das Dach eingeleitet werden.

Gemäß einer bevorzugten Ausführungsform verlaufen die Bänder oder Verstärkungsleisten der Rückhalteeinrichtung für die Himmelplatte senkrecht zu den Längsseitenrändern derselben. Bevorzugt sind zumindest zwei in Längsrichtung voneinander beabstandete derartige Bänder oder Verstärkungsleisten vorgesehen, die ggf. durch quer verlaufende Bänder bzw. Querstreben miteinander fest verbunden sind.

Nachfolgend wird die Erfindung anhand der Zeichnungen beispielhaft näher erläutert; in diesen zeigen:
- Fig. 1: die Draufsicht auf eine mit der Rückhalteeinrichtung versehene Himmelplatte,
- Fig. 2: die Querschnittsansicht entlang der Linie X-X in Fig. 1,
- Fig. 3: eine perspektivische Teilansicht eines Rands einer erfindungsgemäß mit Fanghaken versehenen Himmelplatte eines Fahrzeugdachs,
- Fig. 4: eine Querschnittansicht der Anordnung aus Himmelplatte und Fanghaken der Anordnung von Fig. 1, und
- Fig. 5: eine Teildraufsicht einer randseitig mit Fanghaken versehenen Himmelplatte, die zusätzlich eine Verstärkungsleiste zwischen zwei einander gegenüberliegenden Fanghaken aufweist.

Die Himmelplatte 10 bildet einen Bestandteil eines Schiebehimmels für ein im übrigen nicht gezeigtes Fahrzeugdach zur Abdeckung wenigstens eines öffnungsfähigen, bevorzugt aus einem durchscheinenden oder durchsichtigen Material bestehenden Deckels, beispielsweise Glasdeckels, der im geschlossenen Zustand eine entsprechende Öffnung im Fahrzeugdach verschließt. Ein derartiges Fahrzeugdach ist in der eingangs genannten DE 35 34 375 A1 gezeigt, deren Offenbarungsgehalt hiermit ausdrücklich auch zum Gegenstand der vorliegenden Anmeldung gemacht wird. Zumindest in der Verschlußstellung des Deckels kommt die Himmelplatte 10 deckungsgleich unter diesem zu liegen und verhindert dadurch u.a. Lichteintritt in die Fahrgastzelle des Fahrzeugs.

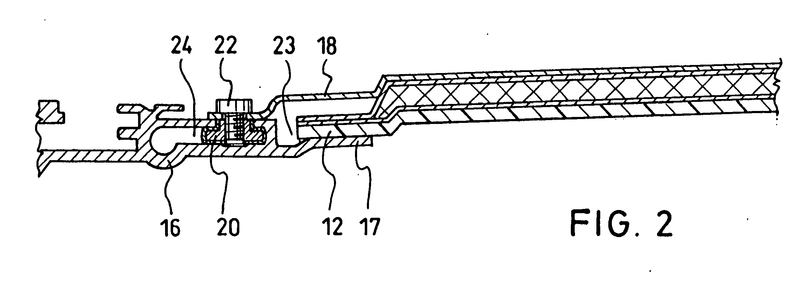

Die Himmelplatte 10 kann beispielsweise gemeinsam mit dem Glasdeckel in an sich bekannter Weise betätigt werden. Alternativ oder zusätzlich kann die Himmelplatte 10 manuell oder motorisch durch einen Fahrgast bzw. durch den Fahrer verschoben werden, indem dieser in eine Griffmulde 11 faßt, die am Vorderrand der Himmelplatte 10 gebildet ist. Im übrigen ist die Himmelplatte 10 als Profilteil mit einem umlaufenden seitlich tiefgezogenen Rand gebildet, von welchem seitlich Gleitelemente 12, 13, 14 und 15 vorstehen, die zur Gleitführung der Himmelplatte 10 an seitlichen dachfesten Führungsschienen 16 dienen, von denen in Fig. 2 eine gezeigt ist. Diese Führungsschiene 16 weist innenliegend einen Steg 17 auf, auf welchem die Gleitelemente 12 und 13 an dem zu der Führungsschiene 16 weisenden Rand der Himmelplatte 10 gleitend aufliegen.

Erfindungsgemäß ist für die Himmelplatte 10 eine Rückhalteeinrichtung in Gestalt von zwei Bändern 18 und 19 vorgesehen, die sich unter gegenseitigem Abstand quer über die Himmelplatte 10 unabhängig von dieser sowie bevorzugt oberhalb von ihr erstrecken. Die Bänder 18 und 19 bestehen bevorzugt aus Stahl oder Federblech, stehen mit ihren seitlichen Enden über die Seitenränder der Himmelplatte 10 vor und sind dort bevorzugt mittels längs verlaufender Gleitstangen 20 bzw. 21 fest miteinander verbunden. Gemäß einer nicht gezeigten alternativen Ausgestaltung sind die Bänder 18 bzw. 19 in das Material der Himmelplatte 10 integriert. Bei einem Aufbau der Himmelplatte 10 aus mehreren Schichten können die Bänder 18 bzw. 19 zwischen diese Schichten eingebettet und mit diesen zu einem Verbund verpreßt oder laminiert werden.

Wie aus Fig. 2 hervorgeht, besitzt jede Gleitstange 20 bzw. 21 ein Außenprofil, das komplementär zu einer Nut in der Führungsschiene 16 ausgebildet ist, in welcher die Gleitstange 20 bzw. 21 längsverschiebbar angeordnet ist. Aus der Darstellung gemäß Fig. 2 geht auch hervor, daß das Band 18 mit der Gleitstange 20 mittels einer Schraube 22 verschraubt ist, die eine Bohrung im Bereich des Endes des Bandes 18 durchsetzt und mit ihrem Gewinde in ein Innengewinde der Gleitstange 20 eingreift. Da die Gleitstangen 20 und 21 sich nahezu über die gesamte Länge der Himmelplatte 10 erstrecken, werden Ausdrückkräfte, welche von unten gegen die Himmelplatte 10 und damit auf die Bänder 18 bzw. 19 einwirken, über die gesamte Länge der Gleitstangen 20 und 21 in die Führungsschienen eingeleitet, die mit dem Fahrzeugdach fest verbunden sind. Dadurch kann erreicht werden, daß der Verbund aus Himmelplatte 10 und Bändern 18 und 19 bei Einwirken der Ausdruckkräften in den beidseitigen Führungsschienen zumindest bis zu einer maximalen Beanspruchung gehalten wird, die durch die existierenden Prüfvorschriften von Fahrzeugherstellern festgelegt ist.

Über die Gestaltung der Bänder 18 und 19 kann deren Biegesteifigkeit gesteuert werden, um eine größtmögliche gemeinsame Ausdrückkraft für das System aus Bändern und Glasdeckel zu gewährleisten. Durch Auswahl eines entsprechenden Materials, einer entsprechenden Stärke und Form der Bänder 18 und 19 kann auch eine gezielte Verformung des Himmels für einen Crash-Fall eingestellt werden, die den Insassenschutz erhöht.

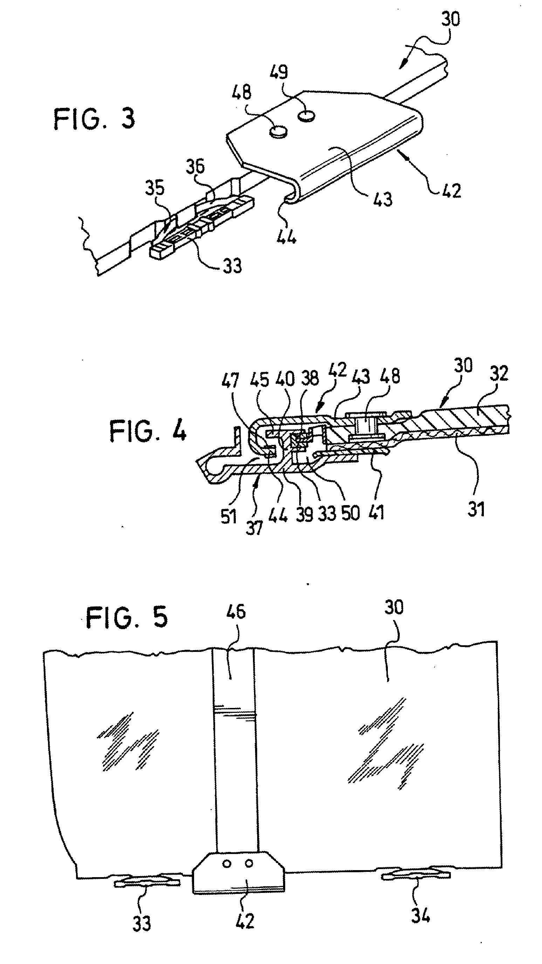

In einem weiteren Ausführungsbeispiel gemäß den Fig. 3, 4 und 5 ist die Himmelplatte des Schiebehimmels eines hier nicht gezeigten, jedoch aus der eingangs genannten DE 35 34 375 A1 bekannten Fahrzeugdachs mit einer Dachöffnung allgemein mit der Bezugsziffer 30 bezeichnet. Wie aus der Querschnittsansicht von Fig. 4 hervorgeht, ist die Himmelplatte 30 vorzugsweise zweiteilig aus zwei unterschiedlichen Materialien gebildet, beispielsweise aus einer Kunststoffplatte 32 mit einer untenliegenden Stoffkaschierung 31. Entlang den beiden Seitenrändern umfaßt die Himmelplatte 30 mehrere Gleitelemente, von denen in Fig. 3 ein Gleitelement 33 an einem Rand der Himmelplatte 30 und in Fig. 5 zwei derartiger Gleitelemente 33 und 34 gezeigt sind. Diese Gleitelemente 33, 34 können in unterschiedlichen Ausführungsformen ausgebildet sein. Im dargestellten Ausführungsbeispiel sind sie über Federarme 35, 36 mit der Himmelplatte 30 verbunden. Die entlang den Seitenrändern der Himmelplatte 30 angeordneten Gleitelemente 33, 34 laufen in Führungsnuten 38, die in Führungsschienen 37 für die Himmelplatte 30 beiderseits der Dachöffnung fest mit dem Dach verbunden sind. Von diesen Führungsschienen ist in Fig. 4 eine Führungsschiene 37 gezeigt, die eine in Richtung zur Himmelplatte 30 offene Führungsnut 38 aufweist, in die die Gleitelemente 33 bzw. 34 eingreifen. Die Führungsschiene 37 hat ein relativ komplexes Profil mit einem in etwa eben verlaufenden unteren Steg 39, von welchem ein T-förmiger Steg 40 nach oben absteht, dessen Querbalken auf der einwärts zur Himmelplatte 30 gelegenen Seite die obere Wand der Führungsnut 38 bildet.

Am inneren Rand der Führungsschiene 37 ist ein Abdeckrahmen 41 vorgesehen, der in Gestalt eines Flachmaterials, insbesondere aus Kunststoff gebildet ist, der auf der Oberseite des unteren Stegs 39 in dessen Innenrandbereich über die gesamte Länge der Dachöffnung befestigt ist und auf dem die Himmelplatte 30 mit ihrer Stoffkaschierung 31 gleitet. Der Abdeckrahmen 41 kann auch als Kederkante ausgeführt sein. Es ist auch denkbar, daß die Himmelplatte 30 mit ihrer Stoffkaschierung bzw. -beschichtung 31 direkt auf einem Rand der Führungsschiene 37 läuft.

Soweit entspricht diese Anordnung aus Himmelplatte und Führungselementen dem Stand der Technik.

Erfindungsgemäß sind spezielle Rückhaltemaßnahmen für die Himmelplatte 40 gegenüber dem Fahrzeugdach getroffen. Diese Maßnahmen bestehen in Fanghaken 42, die beiderseits der Himmelplatte 30 angeordnet und fest mit dieser verbunden sind. Die Fanghaken 42 wirken mit am Fahrzeugdach fest angeordneten Rückhalteschienen zur Krafteinleitung in das feste Dach zusammen.

Es sind zumindest zwei Fanghaken 42 vorgesehen, wobei im Minimum jeweils einer auf jeder Seite der Himmelplatte 30 angeordnet ist. Bevorzugt sind zumindest zwei Fanghaken 42 paarweise einander gegenüberliegend auf jeder Seite der Himmelplatte 30 vorgesehen. Von diesen Fanghakenpaaren ist in Fig. 3, 4 und 5 jeweils nur einer der Fanghaken 42, gezeigt. Bei den Fanghaken 42 handelt es sich um Elemente aus verformungsfestem, bruchfestem Flachmaterial, beispielsweise einem Streifen aus Stahlblech, der im Querschnitt eine U-Form mit unterschiedlich langen Schenkeln aufweist. Ein langer Schenkel 43 des Fanghakens 42 ist über Niete 48 und 49 mit der Himmelplatte 30 verbunden. Die Nieten 48 und 49 durchsetzen die Kunststoffplatte 32 und stellen somit eine stabile, reißfeste Verbindung zwischen Fanghaken 42 und Himmelplatte 30 her.

Ein kurzer Schenkel 44 des Fanghakens 42 umgreift den sich nach außen erstreckenden Teil 45 des T-förmigen Stegs 40 der Führungsschiene 37 im normalen Betrieb kontaktfrei bzw. berührungslos. Der T-Balken-Teil 45 bildet einen Bestandteil der Rückhalteschiene des erfindungsgemäßen Rückhaltesystems für die Himmelplatte 30. Im vorliegenden Fall ist demnach die Rückhalteschiene als integraler Teil der Führungsschiene 17 gebildet. Alternativ hierzu kann die Rückhalteschiene in nicht-dargestellter Weise auch als ein von der Führungsschiene 17 getrenntes Teil gebildet sein. Eine geeignete Profilierung der Führungsschiene 17 gewährleistet die erforderliche Stabilität des Rückhalteschienenteils für das erfindungsgemäße Rückhaltesystem.

Während die Fanghaken 42 im normalen Betriebsfall berührungs- und funktionslos entlang der Rückhalteschiene, insbesondere entlang dem T-Balken-Teil 45 laufen, legen sich die Fanghaken 42 an den T-Balken-Teil 45 der Führungsschiene 37 in dem Fall an, daß die Himmelplatte 30 bei einer Beanspruchung durch Ausdrückkräfte verformt wird, so daß die Himmelplatte 10 mittels der Fanghaken 42 und den Rückhalteschienen zurückgehalten wird. Das erfindungsgemäße Rückhaltesystem für die Himmelplatte 30 stellt damit ein wesentliches Sicherheitsorgan im Fall eines Unfallszenarios dar, bei welchem ohne dieses Rückhaltesystem bei geöffneten Schiebedach unter äußerst ungünstigen Bedingungen die Gefahr bestehen könnte, daß ein Insasse oder Fahrer mit dem Kopf auf die Himmelplatte 30 aufschlägt und diese aus der Führungsschiene herausreißt.

Um die Rückhaltefähigkeit der Himmelplatte 30 selbst zu unterstützen, können die beiden einander gegenüberliegenden Fanghaken 42 durch eine Verstärkungsleiste 46 fest miteinander verbunden sein, die in Fig. 3 in Draufsicht gezeigt ist. Diese Verstärkungsleiste 46 kann aus Stahl, Textil- oder Kunststoffbandmaterial bestehen und gegebenenfalls einen integralen Bestandteil der beiden einander gegenüberliegenden Fanghaken darstellen. Die Verstärkungsleiste 46 kann über der Oberseite der Himmelplatte 30 verlaufen oder insbesondere bei einem mehrschichtigen Aufbau der Himmelplatte 30 in diese integriert sein.

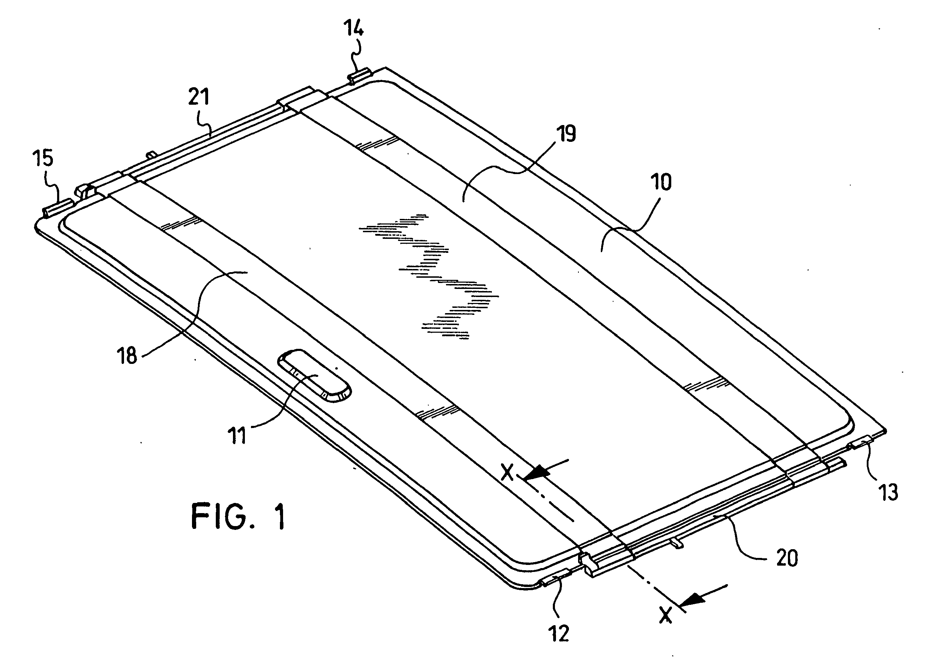

Der Fanghaken 42 ist an seinem kurzen Schenkel 44 bevorzugt mit einem Filzstreifen 47 oder ähnlichem Material versehen, um ein eventuelles Klappern zu vermeiden. Wie im ersten Ausführungsbeispiel gemäß Fig. 1 und 2 können auch die Fanghaken 42 über parallel zu den Seitenkanten der Himmelplatte 30 verlaufende Versteifungs- oder Gleitstangen verbunden sein.

Beiden Ausführungsformen gemäß Fig. 1 und 2 oder gemäß den Fig. 3 bis 5 gemeinsam ist, daß eine von den eigentlichen Führungen und Gleitelementen der Himmelplatte 10 bzw. 30 unabhängige Crash-Sicherung vorgesehen ist, die die Ausdrückkräfte zum Herausdrücken der Himmelplatte aus den Führungen im Crash-Fall wesentlich erhöht.

### Bezugszeichenliste

- 10: Himmelplatte
- 11: Griffmulde
- 12: Gleitelement
- 13: Gleitelement
- 14: Gleitelement
- 15: Gleitelement
- 16: Führungsschiene
- 17: Steg
- 18: Band
- 19: Band
- 20: Gleitstange
- 21: Gleitstange
- 22: Schraube
- 23: Führung (für 12, 13, 14, 15)
- 24: Führung (für 20, 21)
- 30: Himmelplatte
- 31: Stoffkaschierung (Himmelmaterial, auch Kunststoff o.ä.)
- 32: Kunststoffplatte
- 33: Gleitelement
- 34: Gleitelement
- 35: Federarm
- 36: Federarm
- 37: Führungsschiene
- 38: Führungsnut
- 39: Unterer Steg
- 40: T-förmiger Steg
- 41: Abdeckrahmen
- 42: Fanghaken
- 43: langer Schenkel
- 44: kurzer Schenkel
- 45: T-Balken-Teil
- 46: Verstärkungsleiste
- 47: Filzstreifen
- 48: Niete
- 49: Niete
- 50: Führung (für 33, 34)
- 51: Führung (für 42 bzw. 44)

## Patentansprüche

1. Schiebehimmel für ein Fahrzeugdach, der eine mit Gleitelementen (12, 13, 14, 15; 33, 34) an ersten dachfesten Führungen (17; 23; 37; 50) verschiebbar geführte Himmelplatte (10, 30) und dieser zugeordnete zusätzliche Versteifungen aufweist, **dadurch gekennzeichnet, daß** die Himmelplatte (10, 30) mit wenigstens einer Rückhalteeinrichtung in Form von oberhalb oder innerhalb der Himmelplatte (10) verlaufenden, von dieser und ihren Gleitelementen (12, 13, 14, 15; 33, 34) unabhängigen Bändern (18, 19), Fanghaken (42) oder Verstärkungsleisten (46) versehen ist, die im Crash-Fall bei einer Verformung der Himmelplatte (10, 30) durch Ausdrückkräfte seitlich mit zweiten dachfesten Führungen (24, 51) in Eingriff bringbar sind, welche separat von den ersten Führungen (23, 50) vorgesehen sind, die zur Aufnahme der Gleitelemente (12, 13, 14, 15; 33, 34) der Himmelplatte (10, 30) dienen.

2. Schiebehimmel nach Anspruch 1, **dadurch gekennzeichnet, daß** die Bänder (18, 19), Fanghaken (42) oder Verstärkungsleisten (46) beiderseits jeweils an einem längs verlaufenden Gleitelement (20, 21) befestigt sind, das mit den zweiten Führungen (24, 51) im Eingriff steht.

3. Schiebehimmel nach Anspruch 1 oder 2, **dadurch gekennzeichnet, daß** die Fanghaken (42), Bänder (18, 19) oder Verstärkungsleisten (46) durch Wahl ihres Profils und/oder Materials und/oder ihrer Abmessungen auf ein vorgegebenes Verformungsverhalten abgestimmt sind.

4. Schiebehimmel nach einem der Ansprüche 1 bis 3, **dadurch gekennzeichnet, daß** die Bänder (18, 19) oder Verstärkungsleisten (46) senkrecht zu den Längsseitenrändern der Himmelplatte (10, 30) verlaufen.

## Claims

1. Sliding screen for a vehicle roof, which has a screen panel (10, 30) displaceably guided by sliding elements (12, 13, 14, 15; 33, 34) on first guides (17; 23; 37; 50) fixed to the roof, and additional reinforcements assigned to the said panel, **characterized in that** the screen panel (10, 30) is provided with at least one retaining device in the form of belts (18, 19), catch hooks (42) or reinforcing strips (46) running above or inside the screen panel (10) and independent of the latter and their sliding elements (12, 13, 14, 15; 33, 34) which, in the event of a crash and in the event of deformation of the screen panel (10, 30) as a result of ejection forces, can be brought laterally into engagement with second guides (24, 51) fixed to the roof, which are provided separately from the first guides (23, 50) which are used to hold the sliding elements (12, 13, 14, 15; 33, 34) of the screen panel (10, 30).

2. Sliding screen according to Claim 1, **characterized in that** the belts (18, 19), catch hooks (42) or reinforcing strips (46) are fixed on both sides in each case to a sliding element (20, 21) which runs longitudinally and which is in engagement with the second guides (24, 51).

3. Sliding screen according to Claim 1 or 2, **characterized in that** the catch hooks (42), belts (18, 19) or reinforcing strips (46) are matched to a predefined deformation behaviour by choosing their profile and/or material and/or their dimensions.

4. Sliding screen according to one of Claims 1 to 3, **characterized in that** the belts (18, 19) or reinforcing strips (46) run at right angles to the longitudinal side edges of the screen panel (10, 30).

## Revendications

1. Ciel de pavillon coulissant pour un toit de véhicule, comprenant un panneau de pavillon (10, 30) guidé à coulissement, par des éléments de glissement (12, 13, 14, 15 ; 33, 34), sur des premiers guides (17 ; 23 ; 37 ; 50) faisant corps avec le toit, et des rigidifications supplémentaires associées audit panneau, **caractérise par le fait que** le panneau de pavillon (10, 30) est pourvu d'au moins un système de retenue revêtant la forme de bandes (18, 19), de crochets d'emprisonnement (42) ou de barrettes de renfort (46) qui s'étendent au-dessus ou à l'intérieur dudit panneau de pavillon (10), sont indépendant(e)s de ce dernier et de ses éléments de glissement (12, 13, 14, 15 ; 33, 34) et peuvent, en cas de collision, lors d'une déformation dudit panneau de pavillon (10, 30) provoquée par des forces d'écrasement, être mis(es) latéralement en prise avec des seconds guides (24, 51) faisant corps avec le toit, prévus distinctement des premiers guides (23, 50) et servant à recevoir les éléments de glissement (12, 13, 14, 15 ; 33, 34) du panneau de pavillon (10, 30).

2. Ciel de pavillon selon la revendication 1, **caractérisé par le fait que** les bandes (18, 19), les crochets d'emprisonnement (42) ou les barrettes de renfort (46) sont respectivement fixé(e)s, de part et d'autre, à un élément de glissement (20, 21) qui s'étend longitudinalement et est en prise avec les seconds guides (24, 51).

3. Ciel de pavillon selon la revendication 1 ou 2, **caractérisé par le fait que** les crochets d'emprisonnement (42), les bandes (18, 19) ou les barrettes de renfort (46) sont coordonné(e)s avec un comportement préétabli à la déformation, grâce à un choix de leur profil et/ou de leur matériau et/ou de leurs dimensions.

4. Ciel de pavillon selon l'une des revendications 1 à 3, **caractérisé par le fait que** les bandes (18, 19) ou les barrettes de renfort (46) s'étendent perpendiculairement aux bords latéraux longitudinaux du panneau de pavillon (10, 30).
